Europäisches Patentamt

European Patent Office

Office européen des brevets

(11) Veröffentlichungsnummer: **0 467 069 A1**

# EUROPÄISCHE PATENTANMELDUNG

(21) Anmeldenummer: **91109645.1**

(51) Int. Cl.⁵: **B29C 33/30**

(22) Anmeldetag: **12.06.91**

(30) Priorität: **20.07.90 DE 9010832 U**

(43) Veröffentlichungstag der Anmeldung:
**22.01.92 Patentblatt 92/04**

(84) Benannte Vertragsstaaten:
**AT BE CH DE DK ES FR GB GR IT LI NL SE**

(71) Anmelder: **LÄCOVAC-VAKUUMTECHNIK GmbH**
**Im Freeden 12**
**W-4516 Bissendorf 1(DE)**

(72) Erfinder: **Lägel, Ute**
**Im Freeden 12**
**W-4516 Bissendorf 1(DE)**
Erfinder: **Wohlberedt, Michael**
**Im Freeden 12**
**W-4516 Bissendorf 1(DE)**

(74) Vertreter: **Busse & Busse Patentanwälte**
**Postfach 1226 Grosshandelsring 6**
**W-4500 Osnabrück(DE)**

(54) **Vorrichtung zur Herstellung von Kunststoffverpackungen.**

(57) Eine Vorrichtung zur Herstellung von Kunststoffverpackungen aus wenigstens zwei lagenweise längs einer Folienbahn in einer Siegelstation (9) oder dgl. Verbindungsstation zusammenzuführenden und bereichsweise miteinander zu verbindenden Folien, von denen zumindest eine Folie in einer längs der Folienbahn vorangehenden Formstation (5) durch Tiefziehen mit muldenartigen Ausformungen versehen sein kann, wobei die Siegelstation und/oder Formstation ein Werkzeug enthält, das auf die Folie(n) von zwei Seiten mit einem Oberteil (7) und einem Unterteil (6) einwirkt, von denen das Unterteil auf einer Hubeinrichtung (26) aufgelagert ist und das Oberteil über ein die Folie(n) umgreifendes Gestell mit der Hubeinrichtung verbunden ist, wird im Sinne einer einfachen Entnahme und eines einfachen Einsetzens des Werkzeugs beim Werkzeugwechsel oder der Wartung in der Weise ausgestaltet, daß das Unterteil in einer vorwiegend quer zur Folienbahn verlaufenden Entnahmerichtung von der Hubeinrichtung abnehmbar und unterhalb der Folienbahn aus der Vorrichtung entnehmbar ist.

Fig. 2

Die Erfindung betrifft eine Vorrichtung zum Herstellen von Kunststoffverpackungen nach dem Oberbegriff des Anspruchs 1.

In derartigen Vorrichtungen enthalten Werkzeuge für die Bearbeitung der Folie durch Tiefziehen, Siegeln oder Schweißen, bei denen üblicherweise ein Werkzeug-Oberteil oberhalb bei der vorgegebenen Folienbahn und ein Werkzeug-Unterteil unterhalb der Folienbahn hochgenau zusammenwirken müssen. Die exakte Ausrichtung aufeinander wird durch ein Gestell gewährleistet, bei dem beispielsweise mehrere vertikale Säulen einerseits das Oberteil halten und andererseits als Führungssäulen für eine hydraulisch oder pneumatisch betätigbare Hubeinrichtung dienen, auf der das Unterteil aufgelagert ist. Die Verbindung von Werkzeug-Unterteil und Hubgestell ist herkömmlich zu den Seiten hin fixiert, nicht aber nach oben, da das Unterteil sich in angehobener Lage klebend oder klemmend an der Folie festsetzen kann. In diesem Fall sollte es nicht mit Gewalt wieder heruntergerissen werden, um nicht größere Schäden oder Umstände zu verursachen.

Aus dieser nach oben hin lösbaren Verankerung zwischen Werkzeug-Unterteil und Hubeinrichtung hat sich bei der herkömmlichen Bauweise ergeben, daß ein Wechsel des Werkzeugs, insbesondere des Werkzeug-Unterteils, umständlich ist. Es muß nach oben herausgehoben werden und, wenn dazu nicht ein Ende der Folie abgewartet werden kann, muß die Folie aufgeschnitten und aus der Folienbahn entfernt werden, um das Unterteil vom Hubgestell abheben zu können und dann (unter dem Werkzeug-Oberteil hinweg) in Richtung der Folienbahn zu entnehmen.

Die Schwerzugänglichkeit des Werkzeug-Unterteils hat sich herkömmlich schon dann als nachteilig erwiesen, wenn dies nur bei Abnutzung oder Verschmutzung oder bei gelegentlichen Störungen gewartet oder ersetzt werden muß. In vielen Anwendungsfällen besteht aber ein Interesse daran, das Werkzeug häufiger zu wechseln, um etwa kleinere oder größere Verpackungen mit sich ändernder Einteilung der Werkzeugfläche für mehrere gleichzeitig zu formende bzw. zu versiegelnde Verpackungen zu ändern oder auch Verpackungsmulden unterschiedlicher Tiefe zu erreichen. Diesem Bedürfnis konnten Vorrichtungen der gattungsgemäßen Art kaum entsprechen. Dem Wunsch nach höherer Flexibilität stand der Aufwand für einen Werkzeugwechsel entgegen.

Aufgabe der Erfindung ist es dementsprechend, eine Vorrichtung der gattungsgemäßen Art so auszustatten, daß diese bei uneingeschränkter Zuverlässigkeit in der Funktion und uneingeschränkter Handhabbarkeit eine einfache Entnahme und ein einfaches Einsetzen des Werkzeugs zu Zwecken des Werkzeugwechsels oder der Wartung ermöglicht. Diese Aufgabe wird gemäß der Erfindung von einer Vorrichtung nach dem Oberbegriff des Anspruchs 1 ausgehend mit den kennzeichnenden Merkmalen des Anspruchs 1 gelöst. Diese Lösung macht von der Erkenntnis Gebrauch, daß die Entnahme des Werkzeug-Unterteils keineswegs schon deshalb zwangsläufig an eine Entnahmerichtung nach oben gebunden ist, weil das Werkzeug aus Überlegung und Betriebssicherheit heraus nach oben lösbar sein soll. Das Werkzeug-Unterteil ist vielmehr sehr viel leichter und einfacher von der Seite zugänglich, wenn man die üblicherweise vorhandenen Gehäuseverkleidungen öffnet oder abnimmt. Eine verläßliche Justierung und Lagesicherung des Unterteils gegenüber dem Hubgestell läßt sich mit den Fachmann geläufigen Mitteln auch bei seitlicher Einschubrichtung bewerkstelligen.

Besonders vorteilhaft für die Handhabung bei der Entnahme und dem Einsetzen des Werkzeug-Unterteils wie auch für die gegenseitige Lagesicherung nach dem Einsetzen sind in Entnahmerichtung verlaufende Führungen. Mit diesen wird die seitliche Entnahmebewegung geführt und gestützt, was die Bedienung erheblich vereinfacht.

Zur Sicherung des Werkzeug-Unterteils gegenüber der Hubeinrichtung kann mit Vorteil vorgesehen werden, einen von Hand lösbaren Riegel zwischen Unterteil und Hubeinrichtung vorzusehen. Damit läßt sich das Unterteil gegenüber der Hubeinrichtung auch in der Entnahmerichtung fixieren.

Zweckmäßig kann der Riegel in einer Einschubstellung selbstrastend ausgebildet sein, so daß die Festlegung in der Einschubstellung selbsttätig erfolgt. Zweckmäßig ist der Riegel dazu federnd ausgebildet und mit einem Riegelhaken versehen.

Weitere Ausgestaltungen der Erfindung ergeben sich aus der nachfolgenden Beschreibug, in der ein Ausführungsbeispiel des Gegenstands der Erfindung näher erläutert ist. In der Zeichnung zeigen:

Fig. 1   Seitenansicht einer erfindungsmäßen Vorrichtung,

Fig. 2   Schnitt nach Linie II-II in Fig. 1 (ohne Außenverkleidungen),

Fig. 3   eine Ansicht aus Linie III-III in Fig. 2 und

Fig. 4   Schnitt entsprechend Fig. 2, allerdings bei herausgelöstem und teilweise entnommenem Werkzeug-Unterteil.

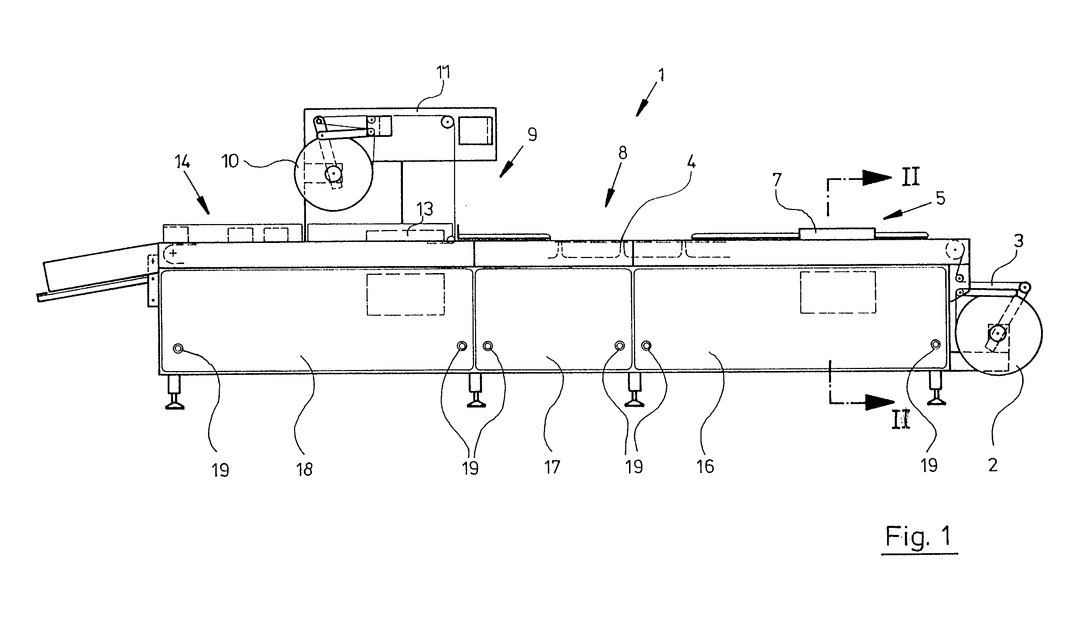

Die in Fig. 1 veranschaulichte, insgesamt mit 1 bezeichnete Vorrichtung zum Herstellen von Kunststoffverpackungen weist einen gebräuchlichen Grundaufbau auf, bei dem eine von einer Rolle 2 abgezogene Unterfolie 3 längs einer horizontalen Folienbahn 4 zunächst eine Formstation 5 durchläuft, in der unter Einwirkung von Wärme und Vakuum zwischen einem Werkzeug-Unterteil 6 und einem Werkzeug-Oberteil 7 muldenförmige Vertiefungen in die Folie eingeformt werden. Je nach Art des Werkzeugs kann eine große einheitliche Mulde geformt werden, häufiger jedoch wird die Fläche des Werkzeugs unterteilt, um in Längs- und/oder Querrichtung verteilte Mulden gleichzeitig zu schaffen. Die Unterfolie durchläuft dann eine Beschickungsstation 8, in der die Mulden mit der zu verpackenden Ware befüllt werden, und weiter eine Siegelstation (oder Schweißstation) 9, in der von einer Rolle 10 abgezogene Oberfolie 11 aufgelegt und zwischen einem Werkzeug-Unterteil 12 und einem Werkzeug-Oberteil 13 unter Einwirkung von Vakuum und Hitze mit der Unterfolie 3 verschweißt wird. Nachfolgend führt die Folienbahn zu einer Trennstation 14, in der die zusammenhängenden Folienpackungen in Einzelverpackungen geschnitten werden. Längs der Folienbahn wird zunächst die Unterfolie und nachher auf die mit dieser versiegelte Oberfolie mittels einer Fördersystems geführt, bei dem von beidseitig der Folienbahn Klammerketten verlaufen, die die Folie mit Hilfe von Klammern halten und transportieren.

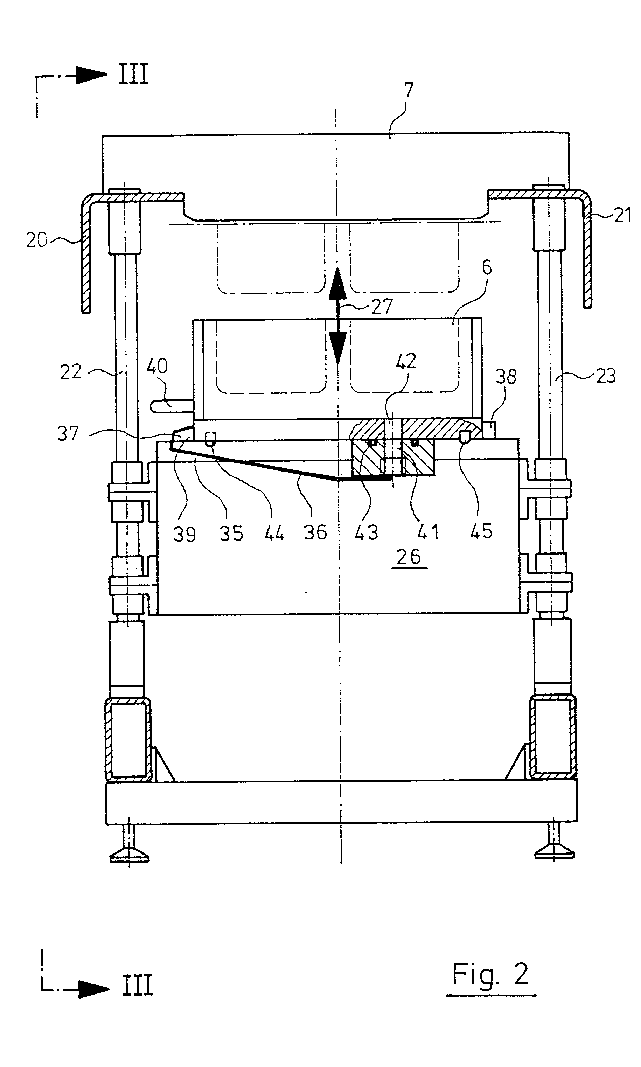

Sowohl in der Formstation 5 als auch in der Siegelstation 9 finden sich Werkzeuge mit Unterteilen 6 bzw. 12 und Oberteilen 7 bzw. 13, die der Form und der Aufteilung der Verpackungsmulden angepaßt sind und die bei Änderungen der Verpakkungsform oder -größe ausgetauscht werden müssen. Ein Werkzeugaustausch oder eine zumindest vorübergehende Entnahme kann auch bei Störungen oder Verschmutzungen der Werkzeuge erforderlich sein. Die sich bei erfindungsgemäßer Ausgesaltung der Werkzeuge ergebenden Vorteile sind im folgenden anhand des Formwerkzeugs mit dem Unterteil 6 und dem Oberteil 7 näher an Hand der Fig. 2 bis 4 veranschaulicht. In diesen Figuren sind Ansichten der Formstation 5 ohne zugehörige Wandverkleidungen der Vorrichtung dargestellt. Diese Verkleidungen seien in irgendeiner gebräuchlichen Verbindungstechnik abnehmbar oder abschwenkbar ausgebildet, wobei die Wandverkleidungen vorzugsweise mit Hilfe von Schnellverschlüssen gesichert sind, um einerseits bei Bedarf ein schnelles Öffnen für die Zugänglichkeit zum Werkzeug-Unterteil zu schaffen, andererseits aber auch ein unerwünschtes Öffnen durch Unbefugte zu erschweren. In Fig. 1 sind noch seitliche Verkleidungsplatten 16,17,18, befestigt mit Schnellverschlüssen 19, zu sehen.

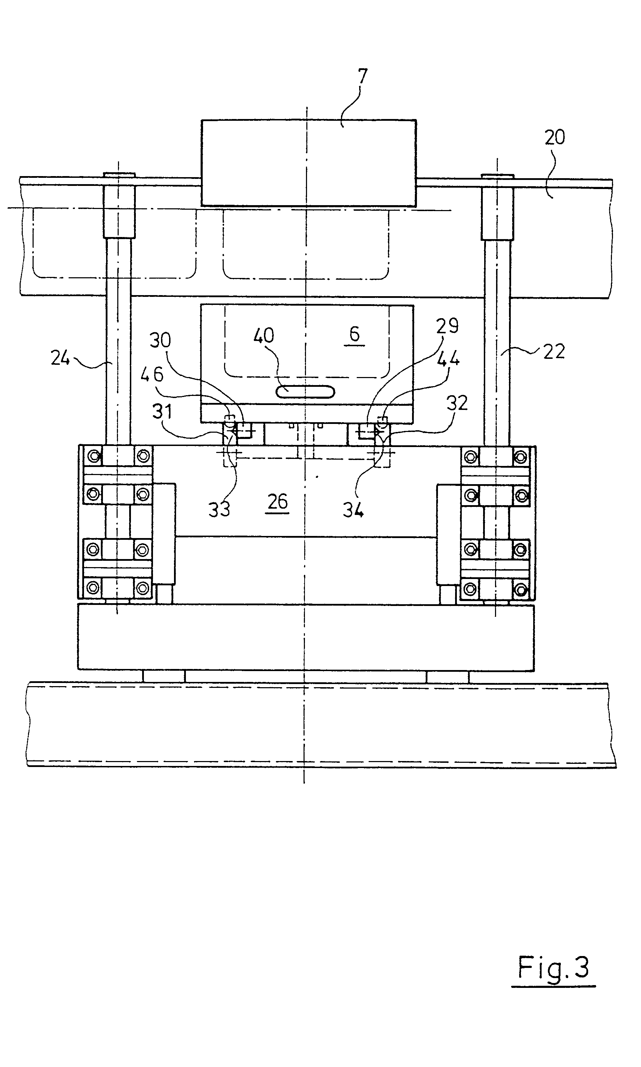

Aus den Fig. 2 und 3 ist ersichtlich, daß das Werkzeug-Oberteil 7 über Längsräume 20,21 auf einem Gestell aus vier Führungssäulen 22 bis 25 (letztere in beiden Ansichten verdeckt) gegenüber einer tiefliegenden Hubeinrichtung 26 abgestützt, die sich mit Hilfe üblicher, nicht dargestellter Druckmittel betätigbarer Stellglieder entlang der Führungssäulen 22 bis 25 nach oben und wieder nach unten bewegen kann, wie dies auch durch einen Pfeil 27 in Fig. 2 verdeutlicht ist. Das Hubgestell seinerseits trägt das Werkzeug-Unterteil 6, welches oberseitig offene Mulden enthält, in die mit Hilfe eingebrachten Vakuums von oben Folie eingesogen und unter Wärmeeinwirkung tiefgezogen werden kann. Insoweit ist die Ausgestaltung grundsätzlich herkömmlicher Art.

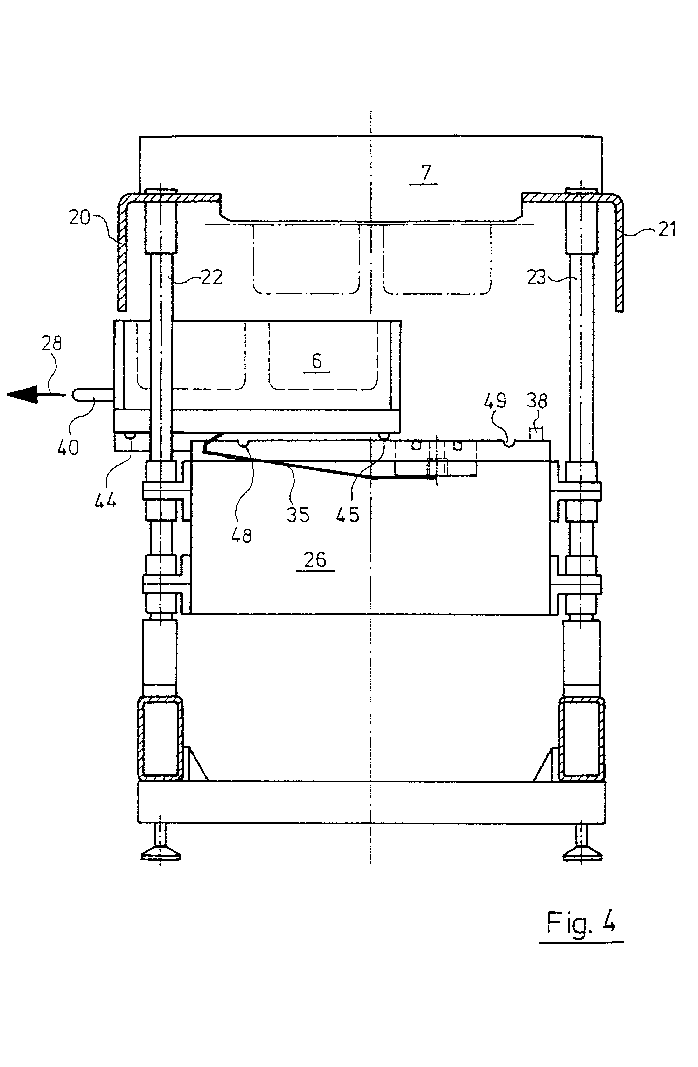

Die Auflagerung des Werkzeug-Unterteils 6 auf dem Hubgestell 26 ist in einer Weise ausgestaltet, die eine Entnahme in waagerechter, in Fig. 4 durch einen Pfeil 28 veranschaulichten Entnahmerichtung möglich macht. Hierzu dienen u.a. Gleitschienen 29,30 an einer im wesentlichen ebenen Unterfläche des Unterteils 6, die mit vorgegebener Führungstoleranz zwischen Auflagerschienen 31,32 eingreifen, wobei letztere fest mit der Hubeinrichtung 26 verbunden sind. Den so gebildeten Führungen 29,30,31,32 stützen das Unterteil 6 gegenüber der Hubeinrichtung 26 von unten ab und sichern es gegen Verschieben in Richtung der Folienbahn 4. Sie hindern aber nicht ein Freigehen des Unterteils 6 gegenüber der Hubeinrichtung 26 nach oben und lassen in gleicher Weise eine Beweglichkeit des Unterteils 6 in Entnahmerichtung (Pfeil 28) zu - sie erleichtern darüber hinaus eine Entnahmebewegung für das Werkzeug-Unterteil dadurch, daß sie dies bei dieser Bewegung abstützen und führen.

Etwaige ungewollte Bewegungen des Unterteils 6 gegenüber der Hubeinrichtung 26 in vertikaler Richtung, die sich sonst vielleicht schon aufgrund geringer Schwingungen oder Beanspruchungen einstellen könnten, werden durch Rastelemente 33,34 eliminiert. Es handelt sich hier um gefederte Kugelelemente, die eine präzise Justierung schaffen und erst bei Überschreiten einer vorgegebenen Auslösekraft freigeben. Es versteht sich, daß hier unter schiedliche bekannte Elemente dieser Art verwandt werden können. In gleicher Weise versteht es sich, daß diese Elemente, wie dargestellt, an den Gleitschienen 29,30 angeordnet sein können, um auf die Auflagerschienen 31,32 einzuwirken wie auch umgekehrt. Diese Rastelemente hindern das Werkzeug-Unterteil aber nicht, wenn es durch Verklemmen, Verkleben oder durch fehlerhafte Sperrung einer Entlüftungsleitung an der Folie haften bleiben sollte, sich von der nach unten bewegenden Hubeinrichtung zu lösen und damit größere Verformungen und Zerstörungen im Bereich der Folien zu vermeiden.

Die Sicherung des Werkzeug-Unterteils 6 gegenüber der Hubeinrichtung 26 in Entnahmerichtung ist nicht den vorgenannten Rastelementen überlassen (die z.B. in horizontal verlaufende Nuten an den Auflagerschienen 31,32 eingreifen und damit nur vertikale Belastungen auffangen können), sondern - horizontal - durch eine Verriegelung 35 gesichert, bei der ein an der Hubeinrichtung festgelegter Riegel mit einem Federarm 36 und einem Riegelhaken 37 hinter eine Vorderkante 39 (entgegen der Entnahmerichtung 28 gesehen) des Unterteils 6 greift und dieses gegen eine Bewegung in Entnahmerichtung 28 blockiert, wenn das Unterteil 6 auf der Rückseite gegen einen Anschlag 38 anliegt, der fest mit der Hubeinrichtung 26 verbunden ist. Der sich vorwiegend horizontal erstreckende Federarm 36 sorgt nicht nur für die Vorspannung zum Einrasten des Riegels 35, er liefert auch eine hinreichende Nachgiebigkeit für ein vertikales Ablösen des Unterteils 6 von der Hubeinrichtung 26 in den bereits betrachteten Notfällen. Weiterhin ist es von Vorteil, daß der Riegel bis zur Vorderkante 39 hinaus vorsteht, was seine Zugänglichkeit und Bedienung erleichtert, zumal er direkt unterhalb eines Handgriffs 40 angreift, mit dem das Unterteil 6 bequem gegriffen werden kann.

Ein derartiges Unterteil ist regelmäßig an Versorgungsleitungen anzuschließen, die die Zuführung von Heiz- oder Kühlmedien, von Vakuum, Druckkluft oder steuerbaren Entlüftungsleitungen ermöglichen. Wie insbesondere aus einem schnittbildlich dargestellten Teil der Fig. 2 an einer solchen beispielhaft für verschiedene Anschlüsse stehenden Leitung gezeigt ist, wird der Anschluß durch zwei miteinander fluchtende Öffnungen 41 und 42 an einander zugewandten Flächen des Unterteils 6 und der Hubeinrichtung 26 geschaffen. Für eine Abdichtung sorgt ein die Öffnungen in der Grenzfläche umschließender Dichtungsring 43, der im dargestellten Fall auf Seiten der Hubeinrichtung 26 eingelagert ist und zur gegenüberliegenden Unterfläche des Werkzeugs 6 vorstehen muß, um einen Dichtungssitz zu schaffen. Dieser Dichtungssitz wird vorzugsweise durch die plane Unterfläche hergestellt, kann natürlich auch besondere Ein- oder Ausformungen unterstützt werden.

Um bei der Entnahme und beim Einschieben des Unterteils 6 Berührungen und Beschädigungen des Dichtrings 43 zu vermeiden, wird das Unterteil 6 durch Abstandshalter 44 bis 47 (letzterer jeweils verdeckt) von den Auflagerschienen und damit der Hubeinrichtung 26 abgehoben, sobald das Unterteil 6 aus seiner Einbaulage entnommen ist. Die Abstandshalter 44 bis 47 schaffen zwar nur einen kleinen Abstand und hemmen auch, da sie aus der Unterfläche des Werkzeugs 6 kugelig herausragen, die Entnahmebewegung kaumt, sie reichen aber aus, den Dichtungsring 43 (und evtl. ähnliche, entsprechend eingesetzte Dichtungsringe) berührungsfrei zu halten. Erst dann, wenn ein Werkzeug 6 seine Einbaulage wieder erreicht hat, fallen die Abstandshalter in passende Vertiefungen 48,49 ein und treten damit außer Funktion.

Sie Situation des Unterteils 6 gegenüber der Hubeinrichtung 26 verdeutlicht sich aus Fig. 4, in der auch der kleine, aber hinreichende Abstand zu sehen ist und insbesondere erkennbar wird, daß sich das Unterteil 6 mit dem Griff 40 und geführt zwischen den Auflagerschienen 31,32 bequem und schnell zur Seite hin entnehmen läßt, was die Wartung und den Austausch vereinfacht und beschleunigt.

**Patentansprüche**

1. Vorrichtung zur Herstellung von Kunststoffverpackungen aus wenigstens zwei lagenweise längs einer Folienbahn in einer Siegelstation oder dgl. Verbindungsstation zusammenzuführenden und bereichsweise miteinander zu verbindenden Folien, von denen zumindest eine Folie in einer längs der Folienbahn vorangehenden Formstation durch Tiefziehen mit muldenartigen Ausformungen versehen sein kann, wobei die Siegelstation und/oder Formstation ein Werkzeug enthält, das auf die Folie(n) von zwei Seiten mit einem Oberteil und einem Unterteil einwirkt, von denen das Unterteil auf einer Hubeinrichtung aufgelagert ist und das Oberteil über ein die Folie(n) umgreifendes Gestell mit dem der Hubeinrichtung verbunden ist, dadurch gekennzeichnet, daß das Unterteil (6) in einer vorwiegend quer zur Folienbahn (4) verlaufenden Entnahmerichtung (28) von der Hubeinrichtung (26) abnehmbar und unterhalb der Folienbahn (4) aus der Vorrichtung (1) entnehmbar ist.

2. Vorrichtung nach Anspruch 1, dadurch gekennzeichnet, daß das Unterteil (6) und die Hubeinrichtung (26) über in Entnahmerichtung (28) verlaufende Führungen (29,30,31,32) miteinander verbunden sind.

3. Vorrichtung nach einem der Ansprüche 1 oder 2, gekennzeichnet durch zumindest einen in Entnahmerichtung (28) wirkenden, von Hand lösbaren Riegel (35) zwischen dem Unterteil (6) und der Hubeinrichtung (26).

4. Vorrichtung nach Anspruch 3, dadurch gekennzeichnet, daß der Riegel (35) zum Verriegeln selbsteinrastend ausgebildet ist.

5. Vorrichtung nach Anspruch 4, dadurch gekennzeichnet, daß der Riegel (35) federnd ausgebildet und mit einem Riegelhaken (37) versehen ist, der vorderseitig freiliegt.

6. Vorrichtung nach einem der Ansprüche 1 bis 5, gekennzeichnet durch Rastelemente (33,34) zwischen dem Unterteil (6) und der Hubeinrichtung (26), die das Unterteil (6) bei Überschreiten einer Auslösebelastung nach oben freigeben.

7.  Vorrichtung nach Anspruch 6, dadurch gekennzeichnet, daß die Rastelemente als Kugel-Federbolzen (33,34) ausgebildet sind.

8.  Vorrichtung nach einem der Ansprüche 1 bis 7, bei der das die Folie(n) umgreifende Gestell in Form von vier paarweise auf jeder Seite der Folienbahn angeordneten Führungssäulen (22,23,24) ausgebildet ist, dadurch gekennzeichnet, daß zumindest die Führungssäulen, die auf der in Entnahmerichtung (28) liegenden Seite angeordnet sind, voneinander einen Abstand aufweisen, der größer als die Querabmessung des Unterteils (6) in Richtung der Folienbahn ist.

9.  Vorrichtung nach einem der Ansprüche 1 bis 8 mit zumindest einem Anschluß des Unterteils (6) an eine Zuleitung für ein Heizmedium, Kühlmedium, Druckluft oder Vakuum, dadurch gekennzeichnet, daß der Anschluß über miteinander fluchtende Öffnungen (41,42) in einander zugewandten Flächen von Unterteil (6) und Hubeinrichtung (26) ausgebildet ist.

10.  Vorrichtung nach Anspruch 9, dadurch gekennzeichnet, daß jeweils eine der Öffnungen (41,42) von einem aus der zugehörigen Fläche vorstehenden Dichtungsring (43) umschlossen ist.

11.  Vorrichtung nach Anspruch 10, gekennzeichnet durch Abstandshalter (44,45,46) zwischen den Flächen, die bei der Entnahme des Unterteils (6) einen die Anlage des Dichtungsrings (43) ausschließenden Abstand schaffen und in einer Endlage in Vertiefungen (48,49) einfallen.

Fig. 1

EP 0 467 069 A1

Fig. 2

Fig.3

Fig. 4

**Europäisches Patentamt**

**EUROPÄISCHER RECHERCHENBERICHT**

Nummer der Anmeldung

**EP 91 10 9645**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 202 020 (ROMAGNOLI)<br>* Figur 1 *<br>– – – | 1 | B 29 C 33/30 |
| A | US-A-2 573 251 (EXLEY)<br>* Spalte 6, Zeile 45 - Spalte 7, Zeile 47; Figuren *<br>– – – | 1,2 | |
| A | US-A-4 773 839 (CASE)<br>– – – | | |
| A | US-A-4 500 275 (RUHL)<br>– – – | | |
| A | EP-A-0 092 686 (BATTENFELD)<br>– – – | | |
| A | FR-A-2 518 012 (HEHL)<br>– – – | | |
| A | FR-A-2 093 288 (MANUFACTURE)<br>– – – | | |
| A | US-A-4 529 371 (NICKLEY)<br>– – – – – | | |

RECHERCHIERTE SACHGEBIETE (Int. Cl.5)

B 29 C
B 31 B
B 65 B

Der vorliegende Recherchenbericht wurde für alle Patentansprüche erstellt

| Recherchenort | Abschlußdatum der Recherche | Prüfer |
|---|---|---|
| Den Haag | 03 Oktober 91 | PEETERS S. |